# FASCICULE DE BREVET EUROPEEN

(11) **EP 0 391 756 B1**
(45) Date de publication et mention de la délivrance du brevet: **02.06.1993**
(21) Numéro de dépôt: 90400710.1
(22) Date de dépôt: 16.03.1990
(51) Int. Cl.: G01L 25/00

(54) **Procédé et système pour la remise à zéro d'un dispositif de mesure du couple notamment sur un cycle**
Verfahren und System zur Nullsetzung einer Drehmomentvorrichtung, insbesondere auf einem Fahrrad oder einem ähnlichen Fahrzeug
Procedure and system for zeroing a torque measuring device, in particular on a bicycle or similar vehicle

(30) Priorité: 29.03.1989 FR 8904058
(43) Date de publication de la demande: 10.10.1990
(73) Titulaire: STE LOOK, F-58000 Nevers (FR)
(72) Inventeur: Mercat, Jean-Pierre, F-37110 Chateau Renault (FR)
(74) Mandataire: Boutin, Antoine

(56) Documents cités:
- EP-A- 0 270 439
- EP-A- 0 283 705
- PATENT ABSTRACTS OF JAPAN, vol. 13, no. 80 (P-832)[3428], 23rd February 1989; & JP-A-63 262 535 (MAZDA MOTOR CORP.) 28-10-1988

## Description

La présente invention concerne les procédés et dispositifs utilisés pour assurer la mesure du couple moteur ou d'une grandeur associée, et ce notamment sur un cycle ou véhicule similaire.

Dans tous les systèmes existant actuellement, -par exemple ceux décrits dans les FR 2.606.876 et 2.617.970- la valeur du couple à mesurer est déterminée par la mesure d'un effort, d'un déplacement ou d'une déformation. Si la sensibilité de ces systèmes est bien reproductible, par contre le zéro d'origine, qui correspond à l'information de mesure pour un couple nul sur la roue motrice, est susceptible de variations. Ces variations peuvent être dues par exemple à une variation de température, à un fluage de matériau, à une déformation permanente, à un frottement mécanique ou à tout autre phénomène physique perturbant.

Sur certains appareils de mesure où il existe un problème similaire, il est prévu un système permettant à l'utilisateur de procéder à une remise à zéro avant toute nouvelle mesure. Ceci est le cas notamment dans le balances de pesée. En effet dans celles-ci un certain nombre de paramètres peuvent varier dans le temps et un grand nombre d'évènements (par exemple surcharge, fluage) peuvent perturber les mesures. Pour y remédier, il suffit d'un système permettant une remise à zéro avant toute nouvelle mesure, car les phénomènes perturbants n'auront pas ensuite le temps de varier au cours de la durée d'une mesure.

Une solution similaire ne pourrait être envisagée que sur certains dispositifs de mesure de couple équipant des cycles afin de permettre une remise à zéro à l'arrêt, en l'occurrence sur les dispositifs utilisant des jauges de mesure. Par contre, une solution de ce genre ne pourrait pas convenir pour les dispositifs qui assurent une mesure dynamique, par exemple les dispositifs du type de celui décrit dans le FR 2.606.876 car, en l'absence de rotation de la roue motrice, ceux-ci sont dans l'incapacité de donner une information sur le couple.

De plus, compte tenu que les entraînements en vélo sont souvent très longs et se déroulent dans des conditions climatiques variables, le zéro d'origine du dispositif de mesure a la possibilité de se décaler au cours d'une même utilisation d'un cycle. Pour résoudre le problème posé, il ne suffit donc pas de prévoir une possibilité de remise à zéro à l'arrêt avant utilisation d'un cycle.

C'est pourquoi la présente invention a pour objet un procédé pour la remise à zéro automatique d'un dispositif électronique de mesure du couple transmis par la roue motrice d'un cycle munie d'un mécanisme de roue libre, et ce pendant l'utilisation du cycle caractérisé en ce que lorsque pendant un temps déterminé un dispositif de surveillance d'un phénomène ou d'un paramètre lié constate la disparition ou le caractère constant de ce couple, il commande la remise à zéro du dispositif de mesure du couple transmis.

Le présent procédé met donc à profit le fait que sur un cycle dont la roue motrice est équipée d'un mécanisme de roue libre, l'utilisateur peut s'arrêter de pédaler lorsque celui-ci est lancé. Or lorsqu'il y a fonctionnement en roue libre, le couple transmis à la roue motrice est évidemment nul. C'est pourquoi le procédé selon l'invention prévoit de repérer le moment où le cycliste est en roue libre afin de pouvoir effectuer alors la remise à zéro du dispositif de mesure de couple. Cependant la reconnaissance des moments de fonctionnement en roue libre peut être réalisée suivant le présent procédé en constatant soit la disparition d'un phénomène lié à l'utilisation normale du cycle (par exemple rotation du pédalier), soit le caractère constant d'un paramètre qui est normalement variable lors d'une telle utilisation normale, par exemple la courbe de variation du couple mesuré. En ce qui concerne celle-ci, il faut noter que le couple transmis par un cycliste est une valeur fluctuante dans le temps du fait même que le pédalage d'un cycliste est un mouvement alternatif. En conséquence, lorsque le cycliste pédale, il n'existe pas de moment où le couple puisse rester constant, hormis les moments où il se trouve nul, c'est-à-dire ceux où le cycle est en roue libre.

C'est pourquoi dans une première forme de mise en oeuvre du présent procédé, la survelllance exercée porte sur le mouvement de rotation du pédalier du cycle correspondant, et en cas de disparition de ce mouvement pendant un temps donné on commande l'opération de remise à zéro sur le dispositif de mesure de couple.

Dans une autre forme de mise en oeuvre du procédé selon l'invention, la survelllance exercée porte sur la courbe de variation de la valeur mesurée par le dispositif de mesure de couple, et en cas de caractère constant de cette courbe pendant un temps donné on commande l'opération de remise à zéro sur ce dispositif de mesure.

Cependant l'invention a également pour objet un système de remise à zéro automatique sur un dispositif de mesure de couple transmis, équipant un cycle dont la roue motrice est munie d'un mécanisme de roue libre, et ce par mise en oeuvre du procédé défini ci-dessus. Ce système comprend en combinaison :
- d'une part des moyens de surveillance d'un phénomène ou d'un paramètre qui disparaît, ou devient constant, quand la roue motrice tourne en roue libre, ces moyens de surveillance étant aptes à émettre un signal déterminé lorsque ce fait se produit pendant un temps donné,
- d'autre part des moyens de commande, qui sont asservis au signal émis par ces moyens de surveillance, et qui sont aptes à agir alors sur le dispositif de mesure du couple transmis pour assurer sa remise à zéro.

Selon d'autres formes de réalisation de l'invention :
- les moyens de surveillance prévus dans ce système consistent en un capteur de passage disposé en regard du pédalier pour surveiller son mouvement de rotation et qui est apte à émettre un signal donné en direction des moyens de commande de l'opération de remise à zéro, lorsque ce capteur ne détecte plus le mouvement du pédalier,
- les moyens de surveillance prévus dans ce système consistent en des moyens aptes à surveiller les variations de la valeur mesurée par le dispositif de mesure de couple, ces moyens de surveillance étant capables d'émettre un signal donné en direction des moyens de commande de l'opération de remise à zéro, lorsque ces moyens de surveillance détectent que la valeur mesurée reste constante pendant un temps donné.

Cependant d'autres particularités de ce système de remise à zéro et du procédé correspondant apparaitront au cours de la description suivante. Celle-ci est donnée en référence aux dessins annexés et sur lesquels :

La figure 1 est une vue en élévation latérale d'une bicyclette équipée d'un dispositif de mesure de couple comportant un système de remise à zéro selon l'invention.

Les figures 2 et 3 représentent deux schémas blocs correspondant à deux autres formes de réalisation de ce système de remise à zéro.

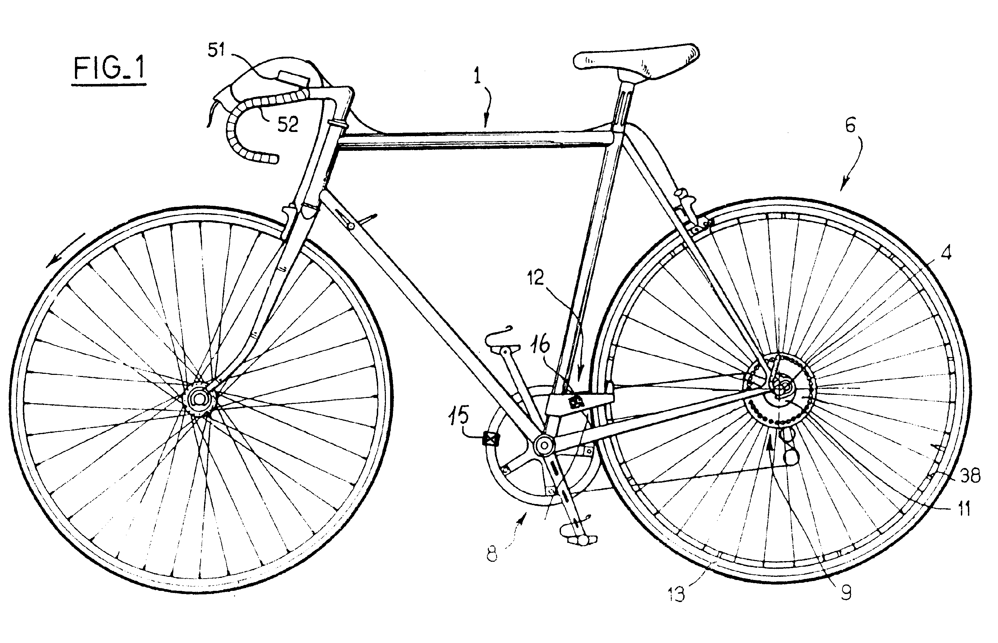

La bicyclette 1 représentée à titre d'exemple sur la figure 1 est équipée d'un dispositif de mesure de couple tel que celui décrit dans le FR 2.606.876. Ce dispositif comprend donc en combinaison d'une part des moyens 9 de détection de la position angulaire du moyeu 11 de la roue motrice 6 autour de son axe 4, et d'autre part des moyens 12 de détection de la position angulaire de la jante 13 de cette même roue autour de son axe. Cependant il n'y a pas lieu de décrire plus en détail ce dispositif de mesure puisque cette description figure dans le FR 2.606.876. Comme indiqué dans celui-ci, ce dispositif permet d'afficher le résultat de la mesure sur un boîtier électronique 51 fixé au guidon 52 du cycle.

Cependant dans le cas présent ce dispositif de mesure est équipé d'un système de remise à zéro selon l'invention. Dans l'exemple représenté à la figure 1, ce système comprend des moyens de surveillance aptes à détecter l'absence de rotation du pédalier 8 du cycle. Ces moyens de surveillance peuvent consister en la combinaison d'un aimant permanent 15 rapporté contre la face interne d'une couronne du pédalier 8 et d'un capteur de passage 16 à effet magnétique qui peut être intégré à l'intérieur du boîtier contenant les moyens de détection 12 surveillant la déformation de la jante 13 de la roue.

Par ailleurs, le dispositif électronique de mesure contenu dans le boîtier 51 comporte un système de remise à zéro. Or celui-ci est asservi au capteur 16 et plus précisément à un signal émis par ce capteur. A cet effet ce dernier est agencé de façon à être en mesure d'émettre un signal déterminé en direction du dispositif de mesure lorsqu'il ne détecte plus aucun passage de l'aimant permanent 15, donc quand il constate en quelque sorte l'absence de rotation du pédalier, ce qui correspond à un fonctionnement du cycle en roue libre. Le signal ainsi émis agit alors sur le système de remise à zéro du dispositif de mesure de façon à ramener celui-ci à zéro.

Ainsi si en cours de l'utilisation de son cycle, l'utilisateur désire procéder à une remise à zéro du dispositif de mesure, il lui suffit de se mettre en roue libre.

De plus cette remise à zéro s'effectue de façon automatique dès que le cycliste cesse de pédaler pour une raison quelconque (descente, ...).
Cependant le présent système est conçu de façon à n'assurer une remise à zéro que si le capteur 16 ne donne aucune information de rotation du pédalier pendant un certain temps (par exemple deux secondes), ceci étant indispensable pour avoir la certitude que le cycle fonctionne en roue libre.

D'autres formes de réalisation du système de remise à zéro selon l'invention sont conçues pour agir automatiquement lorsqu'un paramètre de fonctionnement lié à l'utilisation normale du cycle, par exemple la courbe de variation de la valeur du couple, devient constant pendant un temps donné. En effet, ceci résulte également d'un fonctionnement du cycle en roue libre, donc d'une absence de transmission de couple permettant une remise à zéro. Les systèmes ainsi conçus ont l'avantage d'une action plus rapide que celui précédemment décrit. Par ailleurs, ils sont en mesure de fonctionner même si le cycliste continue à pédaler à faible vitesse tout en roulant en roue libre.

Les systèmes utilisés peuvent affecter des formes différentes suivant que les signaux émis par les moyens détecteurs 9 et 12 du dispositif de mesure de couple sont traités de façon numérique ou analogique.

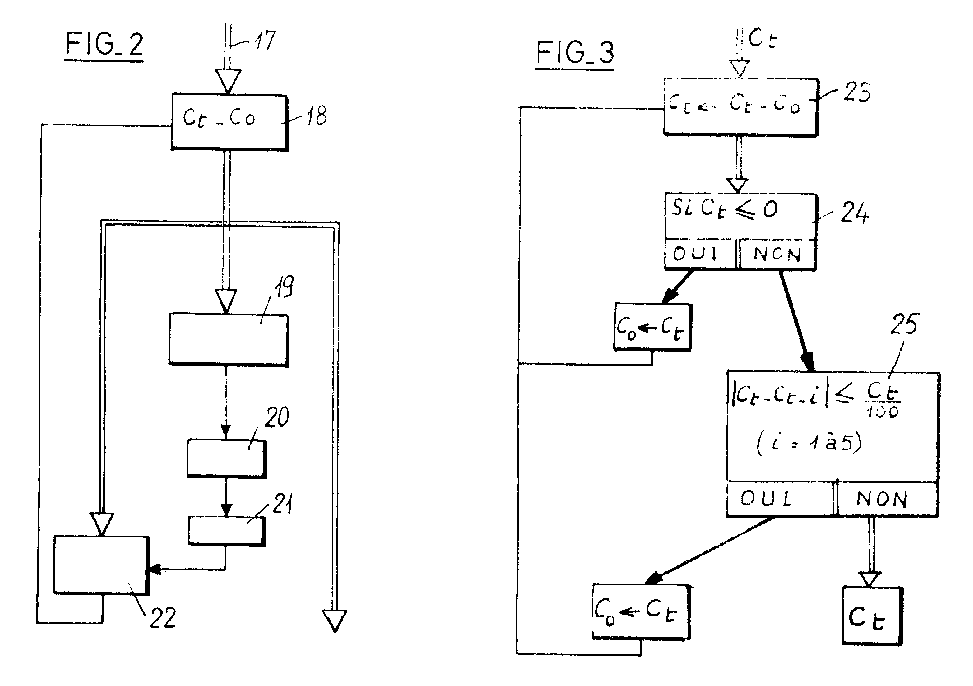

La figure 2 représente le schéma bloc d'un système de remise à zéro conçu pour le second cas, c'est-à-dire celui d'un traitement analogique. Dans un tel cas, on obtient la matérialisation du couple réel par un signal continu sous forme d'une tension ou d'un courant Ct qui est défini à tout instant. Ce courant est dirigé par un conducteur 17 vers un ampli opérationel 18 fonctionnant comme soustracteur pour retrancher le décalage d'origine au signal d'entrée. Le signal obtenu est envoyé sur un dérivateur 19 puis un trigger 20 et un inverseur 21. Par ailleurs, le circuit comporte un bloqueur 22 également relié au soustracteur 18. L'agencement de ce système est tel que dans le cas où il n'y a pas de variation suffisante du signal reçu, le trigger 20 n'est plus actionné. Ceci provoque alors la remise à zéro du dispositif de mesure. Cependant au moyen du bloqueur 22 la valeur constante repérée est conservée en mémoire jusqu'au prochain moment de fonctionnement du cycle en roue libre.

La figure 3 représente le schéma bloc d'un système de remise à zéro conçu pour être utilisé lors d'un traitement numérique des mesures provenant des détecteurs 9 et 12. Dans un tel cas, le micro-processeur équipant le dispositif de mesure dispose donc de valeurs numériques successives qui sont représentatives de la valeur du couple. Ainsi, ce micro-processeur ne traite plus une fonction continue comme dans le cas précédent, mais des valeurs successives constituant un échantillonage. La fréquence de celui-ci n'a pas besoin d'être très rapide étant donné la lenteur du rythme de pédalage. Ainsi, il suffit d'avoir vingt mesures numériques par seconde pour pouvoir restituer de façon précise la courbe réelle de variation du couple transmis.

Le système de remise à zéro utilisé dans un tel cas peut être conçu pour comparer cinq valeurs successives du couple instantané Ct et vérifier si elles sont voisines à 1% l'une de l'autre. Si tel est le cas, ce système déclenche alors la remise à zéro du dispositif de mesure.

Dans un premier étage 23 de ce système on soustrait, à la valeur d'entrée Ct, une valeur Co correspondant au décalage d'origine. A l'étage suivant 24, il est procédé à une comparaison avec la valeur zéro. Un autre étage 25 du présent système assure la comparaison des cinq valeurs successives de Ct et en cas de quasi identité, cet étage commande alors la remise à zéro du dispositif de mesure.

En ce qui concerne l'étage 24 mentionné ci-dessus, il est prévu en raison du fait que les variations par rapport au zéro peuvent être indifféremment positives ou négatives. Or, de par le principe d'une roue libre, le couple transmis ne peut être que positif. Si le système détecte une valeur négative pour le couple, c'est que le zéro se trouve décalé d'au moins cette valeur négative. C'est pourquoi l'étage 24 est prévu pour effectuer une vérification avec la valeur zéro, afin d'effectuer, si besoin est, une rectification appropriée.

Toutefois les systèmes décrits ci-dessus ne constituent que des exemples possibles de réalisation du présent système de remise à zéro du dispositif de mesure de couple. En effet, ce système est susceptible de faire l'objet de nombreuses autres formes de réalisation.

Par ailleurs, ce système de remise à zéro peut équiper des dispositifs de mesure de couple d'un type autre que celui décrit dans le FR 2.606.876, celui-ci n'ayant été cité précédemment qu'à simple titre d'exemple.

## Revendications

1. Procédé pour la remise à zéro automatique d'un dispositif électronique de mesure du couple transmis par la roue motrice d'un cycle munie d'un mécanisme de roue libre, et ce pendant l'utilisation du cycle caractérisé en ce que lorsque pendant un temps déterminé un dispositif de surveillance d'un phénomène ou d'un paramètre lié constate la disparition ou le caractère constant de ce couple, il commande la remise à zéro du dispositif de mesure du couple transmis.

2. Procédé selon la revendication 1 caractérisé en ce que la surveillance exercée porte sur le mouvement de rotation du pédalier du cycle correspondant, et en ce qu'en cas de disparition de ce mouvement pendant un temps donné on commande l'opération de remise à zéro sur le dispositif de mesure de couple.

3. Procédé selon la revendication 1 caractérisé en ce que la surveillance exercée porte sur la courbe de variation de la valeur mesurée par le dispositif de mesure de couple, et en ce qu'en cas de caractère constant de cette courbe pendant un temps donné on commande l'opération de remise à zéro sur ce dispositif de mesure.

4. Système de remise à zéro automatique sur un dispositif de mesure du couple transmis, équipant un cycle dont la roue motrice est munie d'un mécanisme de roue libre, et ce par mise en oeuvre du procédé selon la revendication 1, caractérisé en ce que ce système comprend en combinaison :
- d'une part des moyens de surveillance d'un phénomène ou d'un paramètre qui disparait, ou devient constant, quand la roue motrice tourne en roue libre, ces moyens de surveillance étant aptes à émettre un signal déterminé lorsque ce fait se produit pendant un temps donné,
- d'autre part des moyens de commande, qui sont asservis au signal émis par ces moyens de surveillance (16, 12) et qui sont aptes à agir alors sur le dispositif de mesure du couple transmis pour assurer sa remise à zéro.

5. Système de recalage automatique du zéro selon la revendication 4, caractérisé en ce que les moyens de surveillance (12) prévus dans ce système consistent en un capteur de passage (15) disposé en regard du pédalier pour surveiller son mouvement de rotation et qui est apte à émettre un signal donné en direction des moyens de commande de l'opération de remise à zéro, lorsque ce capteur ne détecte plus le mouvement du pédalier.

6. Système de recalage automatique du zéro selon la revendication 4, caractérisé en ce que les moyens de surveillance (12) prévus dans ce système consistent en des moyens aptes à surveiller les variations de la valeur mesurée par le dispositif de mesure de couple, ces moyens de surveillance étant capables d'émettre un signal donné en direction des moyens de commande de l'opération de remise à zéro, lorsque ces moyens de surveillance détectent que la valeur mesurée reste constante pendant un temps donné.

## Patentansprüche

1. Verfahren zur automatischen Nullsetzung einer elektronischen Drehmomentvorrichtung für das Antriebsrad eines mit einem Freilauf ausgestatteten Fahrrads während seiner Benutzung, dadurch gekennzeichnet, daß während eines bestimmten Zeitintervalls eine Vorrichtung zur Überwachung eines Vorgangs oder eines damit verbundenen Parameters, die den Wegfall oder die Konstanz des Drehmoments feststellt, die Nullsetzung der Drehmomentvorrichtung steuert.

2. Verfahren nach Anspruch 1, dadurch gekennzeichnet, daß die ausgeübte Überwachung von der Rotationsbewegung der Tretkurbel des entsprechenden Fahrrads abhängig ist, und daß bei Wegfall dieser Bewegung während eines gegebenen Zeitintervalls die Nullsetzung auf die Drehmomentvorrichtung ausgesteuert wird.

3. Verfahren nach Anspruch 1, dadurch gekennzeichnet, daß die ausgeübte Überwachung von dem Verlauf der Änderung des von der Drehmomentvorrichtung gemessenen Werts abhängig ist, und daß bei Konstanz dieses Verlaufs für ein gegebenes Zeitintervall die Nullsetzung auf die Drehmomentvorrichtung ausgesteuert wird.

4. System zur automatischen Nullsetzung einer Drehmomentvorrichtung an einem Fahrrad mit einem mit einem Freilauf ausgestatteten Antriebsrad, bei dem das Verfahren nach Anspruch 1 benutzt wird, dadurch gekennzeichnet, daß das System folgende Merkmale in Kombination aufweist:
- einerseits sind Überwachungsmittel für einen Vorgang oder einen Parameter, die wegfallen oder konstantbieiben, wenn sich das Antriebsrad im Freilauf befindet, vorgesehen, die zur Erzeugung eines bestimmten Signals ausgebildet sind, wenn sich dieser Sachverhalt während einer gegebenen Zeit ereignet,
- andererseits sind Steuermittel vorgesehen, die von dem Signal der Überwachungsmittel (16, 12) abhängig sind und die auf die Drehmomentvorrichtung im Sinn ihrer Nullsetzung einwirken.

5. System zur automatischen Nullsetzung nach Anspruch 4, dadurch gekennzeichnet, daß die Überwachungsmittel (12) im System aus einem Durchgangsfühler (16) bestehen, der relativ zur Tretkurbel zur Überwachung ihrer Rotationsbewegung angeordnet und zur Abgabe eines Signals in Richtung auf die Steuermittel der Nullsetzung ausgebildet ist, wenn der Durchgangsfühler keine Bewegungen der Tretkurbel mehr aufnimmt.

6. System zur automatischen Nullsetzung nach Anspruch 4, dadurch gekennzeichnet, daß die Überwachungsmittel (12) im System aus Mitteln zur Überwachung der Änderungen des von der Drehmomentvorrichtung gemessenen Werts bestehen, die zur Abgabe eines Signals in Richtung auf die Steuermittel zur Nullsetzung ausgebildet sind, wenn die Überwachungsmittel feststellen, daß der gemessene Wert während eines gegebenen Zeitintervalls konstantbleibt.

## Claims

1. A procedure for automatically zeroing an electronic device for measuring the torque transmitted by the driving wheel of a bicycle provided with a freewheel mechanism, said procedure taking place during the utilisation of the bicycle,
**characterized** in that, when during a determined time period a monitoring device provided for monitoring a phenomenon or a parameter linked thereto detects the disappearance or the constant character of said torque, it activates the zeroing of the device measuring the transmitted torque.

2. A procedure according to Claim 1, characterized in that the monitoring being carried out applies to the rotational movement of the pedal and gear mechanism of the corresponding bicycle, and in that, in the case of a disappearance of this movement during a given time, the zeroing operation of the torque measuring device is initiated.

3. A procedure according to Claim 1, characterized in that the monitoring applies to the curve of variation of the value measured by the torque measuring device, and in that, in the case of a constant character of said curve during a given time, the zeroing operation of the torque measuring device is activated.

4. A system for the automatic zeroing of a device measuring the transmitted torque, fitted to a bicycle having its driving wheel provided with a freewheel device, this zeroing being done through implementation of the procedure according to Claim 1,
**characterized** in that this system comprises, in combination :
- on one hand, means for monitoring a phenomenon or parameter which disappears or becomes constant when the driving wheel is freewheeling, said monitoring means being adapted for emitting a determined signal when this fact takes place during a given time,
- on another hand, control means which are servo-driven by the signal emitted by said monitoring means (16, 12) and which are adapted for then acting upon the device provided for measuring the transmitted torque for zeroing said device.

5. A system for the automatic re-timing of the zero according to Claim 4, characterized in that the monitoring means (12) provided in said system consist of a passage sensor (16) disposed in registry with the pedal and gear mechanism for monitoring the rotational movement thereof and which is adapted for emitting a given signal towards the means for activating the zeroing operation when said sensor is no longer detecting the movement of the pedal and gear mechanism.

6. A system for the automatic re-timing of the zero according to Claim 4, characterized in that the monitoring means (12) provided in said system consist of means adapted for monitoring the variations of the value measured by the torque measuring device, said monitoring means being capable of emitting a given signal towards the means for controlling the zeroing operation when said monitoring means detect that the measured value remains constant during a given time period.
